# EUROPÄISCHE PATENTSCHRIFT

(11) **EP 0 994 773 B1**
(45) Veröffentlichungstag und Bekanntmachung des Hinweises auf die Patenterteilung: **25.08.2004**
(21) Anmeldenummer: 99917910.4
(22) Anmeldetag: 26.03.1999
(51) Int. Cl.: B32B 5/18, B32B 27/12, B32B 31/26

(54) **VERBUNDWERKSTOFF UND VERFAHREN ZU SEINER HERSTELLUNG**
COMPOSITE MATERIAL AND A METHOD FOR THE PRODUCTION THEREOF
MATERIAU COMPOSITE ET SON PROCEDE DE FABRICATION

(30) Priorität: 02.05.1998 DE 19819750
(43) Veröffentlichungstag der Anmeldung: 26.04.2000
(73) Patentinhaber: Fraunhofer-Gesellschaft zur Förderung der angewandten Forschung e.V., 80686 München (DE)
(72) Erfinder: ZIEGLER, Maik, D-71287 Weissach (DE)
(86) Internationale Anmeldenummer: PCT/EP1999/002156
(87) Internationale Veröffentlichungsnummer: WO 1999/056949

(56) Entgegenhaltungen:
- EP-A- 0 425 923
- WO-A-93/11927
- DE-A- 1 479 995
- DE-A- 19 544 451
- DATABASE WPI Section Ch, Week 9719 Derwent Publications Ltd., London, GB; Class A12, AN 97-209442 XP002111235 & JP 09 059417 A (JSP CORP), 4. März 1997 (1997-03-04)
- DATABASE WPI Section Ch, Week 8835 Derwent Publications Ltd., London, GB; Class A32, AN 88-244959 XP002111236 & JP 63 176114 A (SEKISUI CHEM IND CO LTD) , 20. Juli 1988 (1988-07-20)

## Beschreibung

Die Erfindung betrifft einen Verbundwerkstoff, bestehend aus einem Partikelschaum aus expandiertem Polypropylen (EPP), wenigstens einer Faserschicht und einer auf diese aufgebrachten Schicht aus einem Polymer sowie ein Verfahren zur Herstellung eines Formteils aus einem solchen Verbundwerkstoff.

Thermoplastische Polymere und hieraus durch Expansion hergestellte Schäume finden vielfältige Verwendung. Von Nachteil ist ihre mangelnde Eignung zur Herstellung von innigen Werkstoffverbunden, was seine Ursache vornehmlich in dem schlechten Haftungsvermögen der Oberfläche hat. Dies gilt in besonderem Maß für alle Polyolefine und insbesondere für das weit verbreitete Polypropylen. Expandierte Polymere werden zumeist als Isolationsschicht gegen Schall, Wärme oder Stoß eingesetzt, nehmen jedoch nur in begrenztem Maß Kräfte auf und sind zumeist auch nicht diffusionsdicht und nicht abriebfest. In den meisten Anwendungsfällen muß deshalb der Schaumwerkstoff einseitig beschichtet oder vollständig umhüllt werden, wobei der Schicht- bzw. Hüllwerkstoff beispielsweise eine glatte starre Oberfläche liefert und dem Formteil die notwendige Festigkeit verleiht. Dieser weist deshalb eine Faserverstärkung auf, auf die z.B. ein duroplastischer Werkstoff durch Tränken, Spritzen od. dgl. aufgebracht ist.

Bei solchen Werkstoffverbunden wird entweder der Schaumwerkstoff nach seiner Herstellung und Formbildung mit der faserverstärkten Schicht verbunden und die duroplastische Beschichtung aufgebracht oder aber die vorgefertigte imprägnierte Faserschicht mit dem Schaumstoffkörper verbunden. Dies geschieht durch Kleber, Lösungsmittel od. dgl. Sofern das Formteil eine geschlossene Hülle aufweist, ist es ferner bekannt, diese Hülle vorzufertigen und anschließend auszuschäumen. Das erste Verfahren ist aufwendig und in der Regel wenig umweltverträglich. Es kommt bei Beanspruchungen zu Delaminierungen. Das zweite Verfahren führt zu Erzeugnissen, bei denen es an einer innigen Verbindung zwischen Deckschicht und Schaumstoffkörper fehlt und folglich bei entsprechender Beanspruchung der Deckschicht der Schaumstoffkörper reißt und die Schaumstruktur unter Umständen zerfällt.

Die DE-OS 14 79 995 beschreibt ein Verfahren zur Herstellung eines Laminats, bei dem die Oberfläche einer Schicht aus einem thermoplastischen Polymermaterial an ein sowohl Glasfasern als auch Fasern aus einem thermoplastischen Polymermaterial enthaltendes Textil dadurch gebunden wird, daß das Polymermaterial der thermoplastischen Schicht mit den thermoplastischen Polymerfasern des Textils verschmolzen wird. Der erhaltene Schichtkörper kann durch Einarbeiten von mit Glasfaserschichten verstärkten Harzen auf seine Textilseite verstärkt werden. Hierbei ist weder die Verwendung eines Partikelschaums als Schicht aus einem thermoplastischen Polymermaterial, noch das Aufbringen einer Schicht aus einem erstarrenden, aushärtenden oder vernetzten Polymer aus der flüssigen Phase auf das Textil vorgesehen.

Die EP 0 425 923 A1 beschreibt einen Verbundwerkstoff in Form eines Stoßfängersystems für Kraftfahrzeuge. Das Stoßfängersystem besteht aus einem Träger aus glasfaserverstärktem Propylenpolymerisat, einem energieabsorbierenden Schaumkern aus schaumförmigem Propylenpolymerisat und einer Stoßfängerhülle aus einer Mischung von Propylenpolymerisat und Ethylen/Propylen-Kautschuk. Auch in diesem Fall ist weder eine Faserschicht vorgesehen, noch wird auf diese eine Schicht aus einem erstarrenden, aushärtenden oder vernetzenden Polymer aus der flüssigen Phase aufgebracht.

Entsprechendes gilt für einen Verbundwerkstoff gemäß der DE 195 44 451 A1, welcher aus einem Polypropylen-Partikelschaum mit zwei Deckschichten aus glasfaserverstärktem Polypropylen besteht.

Der DE 41 41 113 A1 ist ein Verbundkörper in Form eines Verkleidungsteils für den Kfz-Innenbereich entnehmbar, der einen Träger aus Polyolefin-Partikelschäumen, eine Dekorsicht aus vornehmlich polyolefinisch aufgebauten Polymeren aus einem mehrlagigen Gewirke oder Gewebe aus vorzugsweise polyolefinischen Polymerfäden sowie ein- oder beidseitig auf das Gewebe auflaminierte Folien aus einem Polyolefin aufweist. Bei diesem Verbundkörper ist der Partikelschaum einerseits nicht mit dem Gewebe verschweißt, andererseits ebenfalls kein Aufbringen einer Schicht aus einem erstarrenden, aushärtenden oder vernetzten Polymer aus der flüssigen Phase vorgesehen.

Der Erfindung liegt die Aufgabe zugrunde, einen Verbundwerkstoff des eingangs genannten Aufbaus vorzuschlagen, bei dem ohne Zuhilfenahme von Zusatzstoffen, wie Kleber, Lösungsmittel od. dgl., ein fester Verbund sowohl zwischen dem EPP-Partikelschaum und der faserverstärkten Schicht als auch zwischen dieser und der auf dieser aufgebrachten Schicht aus einem Polymer gewährleistet ist. Sie ist ferner auf ein Verfahren zur Herstellung eines Formteils aus einem solchen Verbundwerkstoff gerichtet.

Der erste Teil dieser Aufgabe wird erfindungsgemäß mit einem Verbundwerkstoff der eingangs genannten Art dadurch gelöst, daß die Faserschicht eine Mischfasersicht ist, die einen Anteil von Fasern aus Polypropylen (PP), die mit dem Partikelschaum verschweißt sind, und einen weiteren Anteil von Verstärkungsfasern enthält, die eine ausreichende Benetzbarkeit für das aus der flüssigen Phase auf die freie Oberfläche der Faserschicht aufgebrachte erstarrte, ausgehärtete oder vernetzte Polymer aufweisen.

Die erfindungsgemäß vorgesehene Mischfaserschicht erfüllt innerhalb des Verbundwerkstoffs zwei Aufgaben, nämlich einerseits die bekannte Verstärkungsfunktion hinsichtlich Druck- und Zugfestigkeit, andererseits die Funktion einer Haftvermittlung zwischen der Faserschicht und dem PP-Partikelschaum, indem sie PP-Fasern enthält, die beim Anschmelzen des Partikelschaums eine innige Schweißverbindung mit diesem eingehen. Damit ist zwischen der Mischfaserschicht und dem Partikelschaum aus EPP ein fester Verbund gegeben. Weiterhin besitzt die freie Oberfläche der Faserschicht eine ausreichende Benetzbarkeit für das Aufbringen oder Imprägnieren mit einem erstarrenden aushärtenden oder einem vernetzenden Polymer, so daß auf den Verbund aus Mischfaserschicht und EPP-Partikelschaum eine Beschichtung mit den geforderten Eigenschaften, z.B. glatte Oberfläche, Abriebfestigkeit, Spritz- und Kratzfestigkeit etc., aufgebracht ist. Die auf die freie Oberfläche der Faserschicht aufgebrachte Beschichtung aus einem erstarrenden, aushärtenden oder vernetzenden Polymer kann ihrerseits mehrere Schichten aufweisen, z. B. sandwichartigen Aufbau besitzen. Der erfindungsgemäße Verbundwerkstoff läßt sich in Platten oder als dreidimensionales Formteil, gegebenenfalls auch als Hohlkörper, beispielsweise durch Aufformen des Verbundwerkstoffs auf einen Kern, herstellen.

Der EPP-/Faser-Verbund weist eine außergewöhnlich hohe Zug- und Scherfestigkeit auf. Gegenüber anderen Partikelschäumen, insbesondere den meist gebräuchlichen Polystyrolschäumen, zeichnet sich der erfindungsgemäße Verbundwerkstoff durch sein hohes Rückstellvermögen aus, so daß bleibende Druckstellen vermieden werden. Auch ist die höhere Temperaturbeständigkeit in vielen Anwendungsfällen von Vorteil.

Der erfindungsgemäße Verbundwerkstoff ist deshalb in besonderem Maß geeignet für Surfbretter, Wellengleiter, Bootskörper schier unterschiedlicher Bauart und sonstige Sportgeräte, Flugkörper, Isolationsbehälter, Gehäuse, Kfz-Innenverkleidungen und Karosserieteile, wie Stoßfänger, Fronthauben etc.

Der Partikelschaum kann auch ein Compound-Schaum aus EPP und einem weiteren expandierten Polymer, z.B. EPS (expandiertes Polystyrol) und/oder EPE (expandiertes Polyethylen) sein. Auch in einem solchen Fall weist die Mischfaserschicht einen Anteil von PP-Fasern auf, die mit den EPP-Partikeln des Partikelschaums eine innige Verbindung eingehen.

Das auf die freie Oberfläche der Faserschicht aus der flüssigen Phase aufgebrachte Polymer kann beispielsweise ein Thermoplast sein, der durch beliebige bekannte Verfahren, wie Spritzgießen bzw. Niederdruckspritzgießen, Aufpressen, Aufextrudieren bzw. Coextrudieren, Thermoplastschaumgießen, Thermoformen, Flammspritzen, durch Strangablage- oder Quellflußverfahren, auf die Mischfaserschicht aufgebracht sein kann. Der durch Erhitzen in die schmelzflüssige Phase überführte Thermoplast, z.B. Polyolefine, PVC, Polystyrol, Polyacrylate etc., erstarrt beim Abkühlen auf der Mischfaserschicht, wobei diese hierbei nicht nur als Haftvermittler und zur Verstärkung dient, sondern insbesondere auch als Wärmeisolationsschicht wirkt, so daß der Partikelschaum beim Aufspritzen, Aufextrudieren oder dgl. nicht beeinträchtigt wird. Durch den erfindungsgemäßen Einsatz der Mischfaserschicht zwischen dem Partikelschaum und dem aus der flüssigen Phase aufgebrachten Thermoplasten wird die Herstellung eines solchen Verbundwerkstoffs erst möglich, da die Wärmeenergie des schmelzflüssigen Thermoplasten bei dessen Aufbringen auf den Partikelschaum zu einer Freisetzung der in diesem eingeschlossenen Gase und zum Zusammenfallen des Partikelschaums führen würde, so daß eine glatte Oberfläche nicht erhalten werden könnte. Wird beispielsweise als aus der flüssigen Phase aufgebrachter Thermoplast Polypropylen (PP) verwendet, so zeichnet sich der Verbundwerkstoff durch eine hohe Sortenreinheit und niedere Material- bzw. Herstellungskosten aus.

Das aus der flüssigen Phase aufgebrachte Polymer kann auch ein vernetzendes Polymer in Form eines Elastomers z.B. eines Kautschuks, sein. Mit einem Elastomer lassen sich zusätzliche Funktionen im Oberflächenbereich verwirklichen, wie erhöhte Griffigkeit, Dämpfung gegen Druck- und Stoßkräfte etc.

Selbstverständlich kann auch ein vernetzendes Polymer in Form eines Duroplasten auf die freie Oberfläche der Mischfaserschicht aufgebracht sein. Der Duroplast kann - wie auch das Elastomer - auf beliebige Weise, z.B. durch Slush-Techniken, Tränken, Imprägnieren, Sprühen oder Reaktionsspritzgießen (RIM, reaction injection molding bzw. RRIM reinforced reaction injection molding, oder SRIM, structural reaction injection molding), welches auf raschem Dosieren und Mischen der flüssigen duroplastischen Komponenten, Injektion des reaktiven Gemischs auf die Mischfaserschicht und schnellen Aushärten beruht, aufgebracht sein. Es können z.B. auch flüssige Mono- bzw. Oligomere mit in diesen eingemischten pulverförmigen Polymeren verwendet werden, wobei diese für die Mono- bzw. Oligomere beim Aushärten oder Vernetzen auf der Mischfaserschicht nach Art von Kristallisationskeimen wirken und das ausgehärtete oder vernetzte Polymer aufgrund des Anteils an bereits polymerisierten Partikeln eine geringe Polymerisationsschwindung aufweist. Auch bei Verwendung von Duroplasten oder Elastomeren hierbei wirkt die Mischfaserschicht zusätzlich als Wärmeisolationsschicht, um den Partikelschaum bei der in der Regel exothermen Vernetzung nicht zu beeinträchtigen. Als Duroplaste kommen im wesentlichen sämtliche bekannten Duroplaste in Frage, z.B. Polyurethane, Epoxid-, Melanin-, Harnstoff-, Formaldehyd- oder Phenolharze sowie Compounds der genannten Harze. Ein aus dem erfindungsgemäßen Verbundwerkstoff hergestelltes Formteil läßt sich beispielsweise mit der beschichteten Oberfläche der Faserschicht auf einfache Weise mit anderen Teilen verkleben.

Der erfindungsgemäße Verbundwerkstoff eignet sich weiterhin zur Herstellung einer innigen Verbindung von Formteilen aus diesem Verbundwerkstoff mit Formteilen aus dem selben Verbundwerkstoff oder einem anderen Werkstoff. Im erstgenannten Fall können beispielsweise beide Formteile aus dem von einer Mischfaserschicht umgebenen Kern aus EPP bestehen, wobei auf die Mischfaserschichten der Formteile eine den beiden Formteile gemeinsame, diese verbindende Schicht aus einem erstarrten, ausgehärteten oder vernetzten Polymer aufgebracht ist. Die Verbindung des erfindungsgemäßen Verbundwerkstoffs mit einem anderen Werkstoff kann z.B. auf herkömmliche Weise über die glatte Oberfläche des aus der flüssigen Phase auf die Mischfaserschicht des Verbundwerkstoffs aufgebrachten Polymers erfolgen.

Um dem erfindungsgemäßen Verbundwerkstoff eine noch höhere Festigkeit zu verleihen, kann das aus der flüssigen Phase auf die freie Oberfläche der Mischfaserschicht aufgebrachte Polymer faserverstärkt sein, wobei es mit synthetischen Fasern, wie Glas-, Carbon-, Aramid-, Metallfasern oder dergleichen, und/oder mit natürlichen Fasern, wie Cellulose-, Holz-, Hanffasern oder dergleichen verstärkt sein kann.

Das aus der flüssigen Phase auf die freie Oberfläche der Mischfaserschicht aufgebrachte Polymer kann auch zumindest sichtseitig eine Dekorschicht, insbesondere eine Folie, ein Textil oder dergleichen aufweisen, welche auf beliebige bekannte Weise entweder auf das erstarrte, ausgehärtete oder vernetzte Polymer aufgebracht oder gemeinsam mit dem Aufbringen des flüssigen Polymers auf die Mischfaserschicht auf dieses aufgebracht werden kann. Als Dekorschicht kommt z.B. auch ein Furnier, wie ein Holzfurnier, in Frage, welches auf die glatte Oberfläche des erstarrten, ausgehärteten oder vernetzten Polymers aufgeklebt ist.

Die Verstärkungsfasern können herkömmlicher Art, z.B. Glas-, Carbon-, Aramid-, Cellulose- oder Metallfasern sein.

Die Mischfaserschicht kann in herkömmlicher Weise ein Gewebe, Gewirke oder Gelege sein.

Die Erfindung betrifft ferner ein Verfahren zur Herstellung eines Formteils aus einem Verbundwerkstoff des vorgenannten Aufbaus. Ein solches Verfahren zeichnet sich dadurch aus, daß die Mischfaserschicht und dicht gepackte Schaumpartikel aus EPP und gegebenenfalls einem weiteren expandierten Polymer in einer Form auf eine die Oberfläche der Partikel und der PP-Fasern der Mischfaserschicht anschmelzende Temperatur gebracht und anschließend abgekühlt werden und daraufhin auf die freie Oberfläche der Mischfaserschicht das erstarrende, aushärtbare oder vernetzende Polymer aus der flüssigen Phase aufgebracht wird.

Der Begriff "Form" bezeichnet in diesem Zusammenhang jede formbildende Maßnahme, die zu plattenförmigen, räumlichen oder hohlen Formteilen führt. Die dichtgepackten EPP-Partikel und die Mischfaserschicht werden auf eine Temperatur gebracht, bei der die Partikel nur oberflächig anschmelzen und miteinander verschweißen. Da die Mischfaserschicht PP-Fasern enthält, werden auch diese Fasern angeschmolzen und entsteht so ein stoffschlüssiger Verbund zwischen der Mischfaserschicht und dem Partikelschaum. Anschließend wird, wie bereits erwähnt, auf die Mischfaserschicht ein schmelzflüssiger Thermoplast oder ein aushärtbares bzw. vernetztendes Polymer (Elastomer oder Duroplast) mittels beliebiger Techniken aus der flüssigen Phase aufgebracht und nach Erstarren bzw. Aushärten oder Vernetzen das gewünschte Formteil erhalten. Über das erstarrende, vernetzende oder aushärtende Polymer können, wie bereits erwähnt, auch zwei Formteile mit einem Kern oder einer Schicht aus EPP-Partikelschaum miteinander verbunden werden.

Stattdessen kann die Deckschicht auch vorgefertigt, also beispielsweise die Mischfaserschicht mit dem erstarrenden, aushärtbaren oder vernetzenden Polymer imprägniert werden. Dabei ist nur darauf zu achten, daß das Polymer nicht auf die andere Seite der Mischfaserschicht durchschlägt. Anschließend werden auf die freie Oberfläche der Mischfaserschicht die Schaumpartikel aufgebracht und erhitzt, wobei sie gleichzeitig eine innige Verbindung mit den PP-Fasern der Faserschicht eingehen.

Die Schaumpartikel und die Mischfaserschicht können mittels einer sie diffundierenden Gasphase, z.B. Heißdampf, auf die Schmelztemperatur gebracht werden. Dieses Verfahren führt aufgrund der diffusionsoffenen Mischfaserschicht zu einem innigen Verbund der PP-Fasern und der EPP-Partikel sowie der EPP-Partikel untereinander.

Stattdessen können die Schaumpartikel und die Mischfaserschicht auch mittels Mikrowellenenergie, gegebenenfalls unter Zuhilfenahme eines mikrowellenabsorbierenden Mediums, auf die Schmelztemperatur gebracht werden.

Eine Ausführungsvariante des erfindungsgemäßen Verfahrens sieht vor, daß das erstarrende, aushärtbare oder vernetzende Polymer in der flüssigen Phase mit synthetischen und/oder natürlichen Verstärkungsfasern versetzt und daraufhin auf die freie Oberfläche der Mischfaserschicht aufgebracht wird. Handelt es sich bei dem Polymer beispielsweise um einen Thermoplasten, der auf die Mischfaserschicht aufextrudiert wird, so können die Verstärkungsfasern z.B. einem Extruder in einem Bereich der Extruderschnecke zugesetzt werden, in dem der Thermoplast im wesentlichen vollständig plastifiziert ist. Die Verstärkungsfasern können dem flüssigen Polymer -gleichwohl ob es sich bei dem Polymer um einen Thermoplasten, ein Elastomer oder ein Duromer handelt- auf beliebige Weise zugesetzt werden.

Gemäß einer weiteren Ausführungsvariante wird auf das aus der flüssigen Phase aufgebrachte Polymer sichtseitig eine Dekorschicht, wie eine Folie, ein Textil oder dergleichen, aufgebracht. Hierbei ist in bevorzugter Ausführung vorgesehen, daß die Dekorschicht zugleich mit dem Polymer durch Hinterspritzen, Hinterpressen oder dergleichen auf die Mischfaserschicht aufgebracht wird. Somit kann z.B. auf den aus Partikelschaum und Mischfaserschicht bestehenden Verbund das Polymer aus der flüssigen Phase derart aufgebracht werden, indem der Verbund und die Dekorschicht in einer Form angeordnet und zwischen Verbund und Dekorschicht das flüssige und gegebenenfalls mit Verstärkungsfasern versetzte Polymer mittels beliebiger genannter Techniken eingebracht wird. Die glatte Oberfläche der erstarrten, ausgehärteten oder vernetzten Polymers kann auch auf einfache Weise nachträglich mit einer Dekorschicht, z.B. mit einem aufgeklebten Holzfurnier, versehen werden.

Nachstehend ist die Erfindung anhand bevorzugter Ausführungsformen unter Bezugnahme auf die Zeichnungen im einzelnen erläutert. In der Zeichnung zeigen:
- Fig. 1: einen Querschnitt eines aus einem erfindungsgemäßen Verbundwerkstoff hergestellten Formteils und
- Fig. 2: einen Querschnitt zweier miteinander verbundenen Formteile aus einem erfindungsgemäßen Verbundwerkstoff.

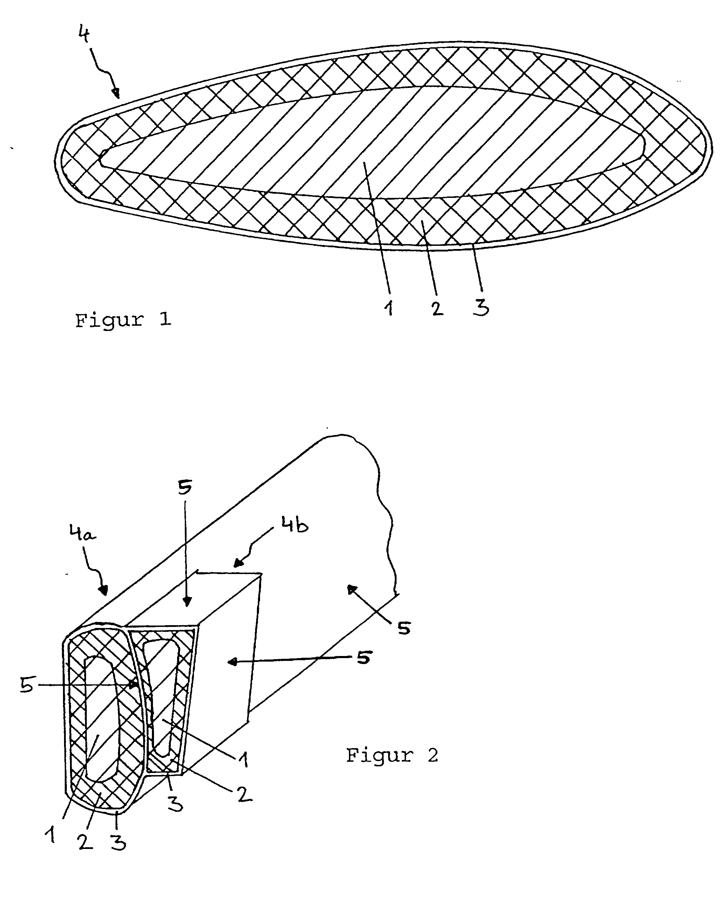

Das in Fig. 1 dargestellte Formteil, beispielsweise ein Surfbrett, weist einen Kern aus einem Partikelschaum 1 auf, der aus EPP oder aus einem Compound-Schaum aus EPP und einem weiteren expandierten Polymer bestehen kann. Den Partikelschaum 1 umgebend ist eine Mischfaserschicht 2 angeordnet, die einen Anteil von PP-Fasern enthält, welche mit dem im Partikelschaum 1 enthaltenen EPP verschweißt sind, so daß eine innige Verbindung zwischen Kern und Mischfaserschicht 2 vorhanden ist. Weiterhin enthält die Mischfaserschicht Verstärkungsfasern, beispielsweise Glas- oder Carbonfasern, welche eine ausreichende Benetzbarkeit für ein aus der flüssigen Phase auf die freie Oberfläche der Mischfaserschicht 2 aufgebrachtes erstarrtes, ausgehärtetes oder vernetztes Polymer 3, z. B. Polyurethan, aufweist. Die Oberflächenschicht 3 kann auch einen sandwichartigen Aufbau aus mehreren übereinander angeordneten Schichten des ausgehärteten oder vernetzten Polymers haben. Die das Surfbrett verstärkende Oberflächenschicht 3, z.B. aus einem Duroplast (Polyurethan), sorgt für eine hohe Abriebs-, Spritz- und Kratzfestigkeit und ist aufgrund des innigen Verbundes mit der Mischfaserschicht 2 dauerhaft mit dieser verbunden.

In Fig. 2 ist eine Verbindung zweier Formteile 4a, 4b aus einem erfindungsgemäßen Verbundwerkstoff gezeigt, beispielsweise eines auf ein Armaturenbrett 4a eines Kraftfahrzeuges aufgesetzten Gehäuses 4b. Beide Formteile 4a, 4b bestehen aus einem geschäumten Partikelschaum 1, einer diesen umgebenden Mischfaserschicht 2 und einer außenseitig auf die Mischfaserschicht 2 aufgebrachten zusätzlichen Schicht aus einem erstarrten, ausgehärteten oder vernetzten Polymer 3. Auf der Sichtseite des Polymers 3 ist eine Dekorschicht 5, z.B. eine Folie, ein Gewebe oder dergleichen, angeordnet.

Im Bereich der Stoßfläche 5 sind die beiden Formteile 4a, 4b über die aus der flüssigen Phase aufgebrachte Polymerschicht 3 miteinander verbunden. Eine derartige Verbindung zeichnet sich durch eine hohe Festigkeit aus, so daß beliebige, aus dem erfindungsgemäßen Verbundwerkstoff mit einem EPP-Kern bestehende Formteile sowohl flächig als auch im Stumpfstoß dauerhaft miteinander verbunden werden können. Die Polymerschicht 3 kann thermoplastisch, elastisch oder duroplastisch sein.

## Patentansprüche

1. Verbundwerkstoff, bestehend aus einem Partikelschaum aus expandiertem Polypropylen (EPP), wenigstens einer Faserschicht und einer auf diese aufgebrachten Schicht aus einem Polymer, **dadurch gekennzeichnet, daß** die Faserschicht (2) eine Mischfaserschicht ist, die einen Anteil von Fasern aus Polypropylen (PP), die mit dem Partikelschaum (1) verschweißt sind, und einen weiteren Anteil von Verstärkungsfasern enthält, die eine ausreichende Benetzbarkeit für das aus der flüssigen Phase auf die freie Oberfläche der Faserschicht (2) aufgebrachte erstarrte, ausgehärtete oder vernetzte Polymer (3) aufweisen.

2. Verbundwerkstoff nach Anspruch 1, **dadurch gekennzeichnet, daß** der Partikelschaum (1) ein Compound-Schaum aus EPP und einem weiteren expandierten Polymer ist.

3. Verbundwerkstoff nach Anspruch 1 oder 2, **dadurch gekennzeichnet, daß** das auf die freie Oberfläche der Mischfaserschicht (2) aufgebrachte Polymer ein Thermoplast ist.

4. Verbundwerkstoff nach einem der Ansprüche 1 oder 2, **dadurch gekennzeichnet, daß** das auf die freie Oberfläche der Mischfaserschicht (2) aufgebrachte Polymer (3) ein Elastomer ist.

5. Verbundwerkstoff nach Anspruch 1 oder 2, **dadurch gekennzeichnet, daß** das auf die freie Oberfläche der Mischfaserschicht (2) aufgebrachte Polymer ein Duroplast ist.

6. Verbundwerkstoff nach einem der Ansprüche 1 bis 5, **dadurch gekennzeichnet, daß** das aus der flüssigen Phase auf die freie Oberfläche der Mischfaserschicht (2) aufgebrachte Polymer (3) faserverstärkt ist.

7. Verbundwerkstoff nach Anspruch 6, **dadurch gekennzeichnet, daß** das Polymer (3) mit synthetischen Fasern, wie Glas-, Carbon-, Aramid-, Metallfasern oder dergleichen, verstärkt ist.

8. Verbundwerkstoff nach Anspruch 6 oder 7, **dadurch gekennzeichnet, daß** das Polymer (3) mit natürlichen Fasern, wie Cellulose-, Holz-, Hanffasern oder dergleichen, verstärkt ist.

9. Verbundwerkstoff nach einem der Ansprüche 1 bis 8, **dadurch gekennzeichnet, daß** das aus der flüssigen Phase auf die freie Oberfläche der Mischfaserschicht (2) aufgebrachte Polymer (3) zumindest sichtseitig eine Dekorschicht (5) aufweist.

10. Verbundwerkstoff nach Anspruch 9, **daduch gekennzeichnet,** daß die Dekorschicht (5) eine Folie aufweist.

11. Verbundwerkstoff nach Anspruch 9, **dadurch gekennzeichnet, daß** die Dekorschicht (5) ein Textil aufweist.

12. Verbundwerkstoff nach einem der Anprüche 1 bis 11, **dadurch gekennzeichnet, daß** die Verstärkungsfasern der Mischfaserschicht (2) Glas-, Carbon-, Aramid-, Cellulose- oder Metallfasern sind.

13. Verbundwerkstoff nach einem der Ansprüche 1 bis 12, **dadurch gekennzeichnet, daß** die Mischfaserschicht (2) ein Gewebe, Gewirke oder Gelege ist.

14. Verfahren zur Herstellung eines Formteils aus einem Verbundwerkstoff nach einem der Ansprüche 1 bis 13, **dadurch gekennzeichnet, daß** die Mischfaserschicht (2) und dicht gepackte Partikel aus EPP und gegebenenfalls einem weiteren expandierten Polymer in einer Form auf eine die Oberfläche der Partikel und der PP-Fasern der Mischfaserschicht (2) anschmelzende Temperatur gebracht und anschließend abgekühlt werden und daraufhin auf die freie Oberfläche der Mischfaserschicht (2) das erstarrende, aushärtbare oder vernetzende Polymer (3) aus der flüssigen Phase aufgebracht wird.

15. Verfahren nach Anspruch 14, **dadurch gekennzeichnet, daß** die Mischfaserschicht (2) und die Schaumpartikel mittels einer sie diffundierenden, heißen Gasphase auf Schmelztemperatur gebracht werden.

16. Verfahren nach Anspruch 14, **dadurch gekennzeichnet, daß** die Mischfaserschicht (2) und die Schaumpartikel mittels Mikrowellenenergie auf die Schmelztemperatur gebracht werden.

17. Verfahren nach einem der Ansprüche 14 bis 16, **dadurch gekennzeichnet, daß** das erstarrende, aushärtbare oder vernetzende Polymer (3) in der flüssigen Phase mit synthetischen und/oder natürlichen Verstärkungsfasern versetzt und daraufhin auf die freie Oberfläche der Mischfaserschicht (2) aufgebracht wird.

18. Verfahren nach einem der Ansprüche 14 bis 17, **dadurch gekennzeichnet, daß** auf das aus der flüssigen Phase aufgebrachte Polymer (3) sichtseitig eine Dekorschicht (5), wie eine Folie, ein Textil oder dergleichen, aufgebracht wird.

19. Verfahren nach Anspruch 18, **dadurch gekennzeichnet, daß** die Dekorschicht (5) zugleich mit dem Polymer (3) durch Hinterspritzen, Hinterpressen oder dergleichen auf die Mischfaserschicht (2) aufgebracht wird.

## Claims

1. Composite material composed of a particle foam made of expanded polypropylene (EPP), at least one fibre layer and a layer of a polymer applied thereto, **characterised in that** the fibre layer (2) is a mixed fibre layer, which contains a proportion of fibres of polypropylene (PP), which are welded with the particle foam (1), and a further proportion of reinforcing fibres, which have an adequate wetting capability for the solidified, cured or cross-linked polymer (3) applied from the liquid phase onto the free surface of the fibre layer (2).

2. Composite material according to Claim 1, **characterised in that** the particle foam (1) is a compound foam comprising EPP and a further expanded polymer.

3. Composite material according to Claim 1 or 2, **characterised in that** the polymer applied to the free surface of the mixed fibre layer (2) is a thermoplastic.

4. Composite material according to one of Claims 1 or 2, **characterised in that** the polymer (3) applied to the free surface of the mixed fibre layer (2) is an elastomer.

5. Composite material according to Claim1 or 2, **characterised in that** the polymer applied to the free surface of the mixed fibre layer (2) is a thermosetting plastic.

6. Composite material according to one of Claims 1 to 5, **characterised in that** the polymer (3) applied from the liquid phase to the free surface of the mixed fibre layer (2) is fibre-reinforced.

7. Composite material according to Claim 6, **characterised in that** the polymer (3) is reinforced with synthetic fibres such as glass, carbon, aramide, metal fibres or suchlike.

8. Composite material according to Claim 6 or 7, **characterised in that** the polymer (3) is reinforced with natural fibres such as cellulose, wood, hemp fibres or suchlike.

9. Composite material according to one of Claims 1 to 8, **characterised in that** the polymer (3) applied from the liquid phase to the free surface of the mixed fibre layer (2) has a decorative layer (5) at least on the visible side.

10. Composite material according to Claim 9, **characterised in that** the decorative layer (5) has a foil.

11. Composite material according to Claim 9, **characterised in that** the decorative layer (5) has a textile.

12. Composite material according to one of Claims 1 to 11, **characterised in that** the reinforcing fibres of the mixed fibre layer (2) are glass, carbon, aramide, cellulose or metal fibres.

13. Composite material according to one of Claims 1 to 12, **characterised in that** the mixed fibre layer (2) is a woven fabric, knitted fabric or scrim.

14. Method of producing a formed part made of a composite material according to one of Claims 1 to 13, **characterised in that** the mixed fibre layer (2) and densely packed particles of EPP and possibly a further expanded polymer in a mould are brought to a temperature to melt the surface of the particles and the PP fibres of the mixed fibre layer (2) and are subsequently cooled, and then the solidifying curable or cross-linking polymer (3) is applied from the liquid phase onto the free surface of the mixed fibre layer (2).

15. Method according to Claim 14, **characterised in that** the mixed fibre layer (2) and the foam particles are brought to melting temperature by means of a hot gas phase diffusing them.

16. Method according to Claim 14, **characterised in that** the mixed fibre layer (2) and the foam particles are brought to the melting temperature by means of microwave power.

17. Method according to one of Claims 14 to 16, **characterised in that** the solidifying curable or cross-linking polymer (3) has synthetic and/or natural reinforcing fibres added to it in the liquid phase and is then applied to the free surface of the mixed fibre layer (2).

18. Method according to one of Claims 14 to 17, **characterised in that** a decorative layer (5) such as a foil, a textile or suchlike is applied to the polymer (3) applied from the liquid phase.

19. Method according to Claim 18, **characterised in that** the decorative layer (5) is applied to the mixed fibre layer (2) at the same time as the polymer (3) by rear spraying, rear pressing or suchlike.

## Revendications

1. Matériau composite constitué d'une mousse de particules en polypropylène expansé (EPP), au moins une couche de fibres et une couche de polymère appliquée sur celle-ci,
**caractérisé en ce que**
la couche de fibres (2) est une couche de fibres mixtes qui comprend une partie de fibres en polypropylène (PP) soudées avec la mousse de particules (1) et une autre partie de fibres de renforcement qui présentent une mouillabilité suffisante pour le polymère (3) solidifié, durci ou réticulé, appliqué à partir de la phase liquide sur la surface libre de la couche de fibres (2).

2. Matériau composite selon la revendication 1,
**caractérisé en ce que**
la mousse de particules (1) est une mousse de compound en EPP et en un autre polymère expansé.

3. Matériau composite selon la revendication 1 ou 2,
**caractérisé en ce que**
le polymère appliqué sur la surface libre de la couche de fibres mixtes (2) est une matière thermoplastique.

4. Matériau composite selon l'une quelconque des revendications 1 ou 2,
**caractérisé en ce que**
le polymère (3) appliqué sur la surface libre de la couche de fibres mixtes (2) est un élastomère.

5. Matériau composite selon l'une quelconque des revendications 1 ou 2,
**caractérisé en ce que**
le polymère appliqué sur la surface libre de la couche de fibres mixtes (2) est une résine thermodurcissable.

6. Matériau composite selon l'une quelconque des revendications 1 à 5,
**caractérisé en ce que**
le polymère (3) appliqué sur la surface libre de la couche de fibres mixtes (2) à partir de la phase liquide est renforcé par des fibres.

7. Matériau composite selon la revendication 6,
**caractérisé en ce que**
le polymère (3) est renforcé par des fibres synthétiques telles que des fibres de verre, de carbone, d'aramide, de métal ou similaires.

8. Matériau composite selon la revendication 6 ou 7,
**caractérisé en ce que**
le polymère (3) est renforcé par des fibres naturelles telles que des fibres de cellulose, de bois, de chanvre ou similaires.

9. Matériau composite selon l'une quelconque des revendications 1 à 8,
**caractérisé en ce que**
le polymère (3) appliqué sur la surface libre de la couche de fibres mixtes (2) à partir de la phase liquide présente, du moins sur la face apparente, une couche décorative (5).

10. Matériau composite selon la revendication 9,
**caractérisé en ce que**
la couche décorative (5) présente un film.

11. Matériau composite selon la revendication 9,
**caractérisé en ce que**
la couche décorative (5) présente un textile.

12. Matériau composite selon l'une quelconque des revendications 1 à 11,
**caractérisé en ce que**
les fibres de renforcement de la couche de fibres mixtes (2) sont des fibres de verre, de carbone, d'aramide, de cellulose ou de métal.

13. Matériau composite selon l'une quelconque des revendications 1 à 12,
**caractérisé en ce que**
la couche de fibres mixtes (2) est un tissu, un maillage ou un tricot.

14. Procédé de fabrication d'une pièce moulée à partir d'un matériau composite selon l'une quelconque des revendications 1 à 13,
**caractérisé en ce que**
la couche de fibres mixtes (2) et des particules compactées en EPP, et le cas échéant en un autre polymère expansé, sont appliquées dans un moule mis à une température faisant fondre la surface des fibres de particules et de PP de la couche de fibres mixtes (2) puis refroidies, et on applique ensuite sur la surface libre de la couche de fibres mixtes (2) à partir de la phase liquide, le polymère (3) se solidifiant, durcissable ou réticulant.

15. Procédé selon la revendication 14,
**caractérisé en ce que**
la couche de fibres mixtes (2) et les particules de mousse sont mises à la température de fusion au moyen d'une phase gazeuse chaude les diffusant.

16. Procédé selon la revendication 14,
**caractérisé en ce que**
la couche de fibres mixtes (2) et les particules de mousse sont mises à la température de fusion au moyen d'énergie à micro-ondes.

17. Procédé selon l'une quelconque des revendications 14 à 16,
**caractérisé en ce que**
dans la phase liquide le polymère (3) se solidifiant, durcissable ou réticulant est mélangé avec des fibres de renforcement synthétiques et/ou naturelles, puis appliqué sur la surface libre de la couche de fibres mixtes (2).

18. Procédé selon l'une quelconque des revendications 14 à 17,
**caractérisé en ce que**
sur le polymère (3) appliqué à partir de la phase liquide on applique sur la face apparente une couche décorative (5) telle qu'un film, un textile ou similaires.

19. Procédé selon la revendication 18,
**caractérisé en ce que**
la couche décorative (5) est appliquée sur la couche de fibres mixtes en même temps que le polymère (3) par injection de remplissage, emboutissage ou similaires.
